# EUROPEAN PATENT SPECIFICATION

(11) **EP 1 340 371 B1**
(45) Date of publication and mention of the grant of the patent: **07.03.2012**
(21) Application number: 01991732.7
(22) Date of filing: 19.11.2001
(51) Int. Cl.: H04N 5/63

(54) **CIRCUIT ARRANGEMENT FOR PROCESSING A BAND OF DIGITAL TELEVISION CHANNELS**
SCHALTUNGSVORRICHTUNG ZUR VERARBEITUNG EINES BEREICHES VON DIGITALEN FERNSEHKANÄLEN
AGENCEMENT DE CIRCUIT PERMETTANT DE TRAITER UNE BANDE DE CANAUX TELEVISUELS NUMERIQUES

(30) Priority: 30.11.2000 EP 00126155
(43) Date of publication of application: 03.09.2003
(73) Proprietor: Thomson Licensing, 92130 Issy-les-Moulineaux (FR)
(72) Inventor: DREXLER, Michael, 30989 Gehrden (DE); GAEDKE, Klaus, 30659 Hannover (DE)
(74) Representative: Arnold, Klaus-Peter
(86) International application number: PCT/EP2001/013344
(87) International publication number: WO 2002/045417

(56) References cited:
- EP-A- 0 939 530
- US-A- 5 919 261
- US-A- 6 085 236

## Description

The invention refers to a circuit arrangement comprising an input section for receiving a band of digital television channels, a signal processing section, a power supply, and an output section for supplying a television receiver with a selected television program. Circuit arrangements of this kind are known for example as digital satellite receivers or settop boxes in consumer electronics which receive a plurality of television channels allowing a user to select a certain program for viewing with a television set. As a television receiver for receiving a television channel in this sense also video recorders, camcorders or personal computers (PCs) are understood.

Conventional satellite receiving stations for homes as known from prior art use a satellite antenna and a low noise converter (LNB), which converts the received band of satellite channels to an intermediate frequency, and a satellite receiver which is controlled by a user for selecting the wanted television program. If a satellite installation for a multi-user system is required, a multi-switch behind the low noise converter is used for supplying several satellite receivers, being connected each to a television set, with the band of television channels. With this arrangement several rooms of a home or several apartments within a building are supplied with television programs and a user can select a preferred television program independently of the other users. - Digital set-top boxes as known up to now provide a television receiver with only one television channel, as selected by a user.

For digital consumer electronics devices and computers a new bus standard, IEEE 1394, has been established for linking several devices, known for example also as "i.LINK" or HPSB (High Performance Serial Bus), or "FireWire". This bus allows the transmission of digital audio and video data in real time with high data rates in both directions. Information about the IEEE 1394 bus is provided by computer literature, for example PC Magazin June 2000, pages 180ff., or from the 1394 Trade Association (www.1394ta.org). The 1394 bus is already widely used in computer products as for example in personal computers or note books, or in digital camcorders. IEEE 1394 is an international standard with a low cost digital interface that will integrate entertainment, communication and computing electronics into consumer multimedia.

There are two types of IEEE 1394 data transfer: asynchronous and isochronous data transfer. The asynchronous data transfer is a traditional computer memory mapped, load and store interface. Data requests are sent to a specific address and an acknowledgement is returned. Isochronous data channels provide a data transport at a predetermined rate in a streaming mode, using an isochronous channel identification number (ID).

The protocol for the IEEE 1394 bus is arranged in three layers: the transaction layer converts the data of the IEEE 1394 bus to a parallel bus of the corresponding device using a control and status register set (CSR) according to IEEE 1212, and is arranged as a software or firmware. The transaction layer is coupled to the link layer, which generates the data packages for the asynchronous and synchronous modes according to the specification of the IEEE 1394 bus, and which provides the error correction and the addressing to a certain device. The link layer provides also the data transmission for the isochronous channel.

The link layer is coupled to the physical layer, which comprises the line drivers and initialization, arbitration and plug-and-play logic. It recognizes new installed devices and provides an identification address for the data transmission between the devices of the bus. The physical layer is coupled to the transaction layer via the link layer, and is coupled to the input/output port of the device for providing the data transmission.

As the cable connections twisted pair lines with four wires are used for the data transmission, optionally six wires are also possible, when a supply voltage is required. For longer line connections a transmission via Plastic Optical Fiber (POF) or multi mode optical glass fiber is possible. The voltage supply is provided via the separate cable pair and provides 8 to 33 V with a maximum of 1,5 A for one port.

The physical layer provides one or more output ports for a connection to other devices, and up to 63 devices can be coupled to one IEEE 1394 bus, arranged in parallel and in series, the series connections being restricted to a maximum of 16. The IEEE 1394 bus can be used also with high frequency transceivers for working as a wireless network. As a new standard for wireless transmission of consumer electronics devices via the IEEE 1394 bus the so-called "COMMEND" standard is being established.

For providing an inter brand operability of consumer electronics devices for a transmission of data via IEEE 1394, the device specification HAVi (Home Audio Video Interoperability) is known, which allows a user-friendly control of these devices in homes (www.havi.org). It allows a control of a digital home-network with audio and video devices via the IEEE 1394 bus, for example by using an on-screen display of a television receiver.

A circuit arrangement according to the preamble of the claim 1 is disclosed in US 6,085,236. US 5,919.261 describes a circuit arrangement, which recognizes whether it is connected or not connected via an IEEE 1394 cable to an apparatus, and when the circuit arrangement is not connected to the apparatus, the link layer controller of the circuit arrangement does not operate.

EP-A-0939530 discloses a data communication system comprising an application layer, a link layer and a physical layer operating in accordance with the IEEE 1394 standard, and a controller for managing data transmission between a source and a destination, wherein, when a transmission of the information data is interrupted according to a default setting of a network, the transmission of the information data is resumed without discarding any part of the data stored in a memory space.

It is the object of the present invention to provide a circuit arrangement for receiving a band of television channels as described above, which provides a high versatility and an economic power consumption.

This object is achieved by means of the features of the invention as specified in claim 1. Advantageous developments of the invention are specified in the subclaims.

The circuit arrangement according to the invention comprises an input section for receiving a band of digital television channels, a signal processing section, a power supply, and an output section for supplying one or several television receivers with a television channel. The output section of the circuit arrangement comprises an IEEE 1394 port for a connection to the television receivers for providing digital data transmissions in both directions, and the power supply comprises a power down mode in which at least parts of the input section and the signal processing section are switched off, when none of the television receivers are active. Because of the bus management of the IEEE 1394 bus the circuit arrangement knows always the configuration of the bus and especially which television receiver is active and in an on-mode. When none of the television receivers is active, the circuit arrangement switches off internal parts, especially the input section and digital signal processing circuitry, including the transaction layer and the link layer.

The circuit arrangement may be a digital satellite receiver with an input section for coupling to a satellite antenna for receiving a band of television channels via a satellite, or a digital settop box for receiving a band of television channels via cable. Because of the high data transmission of the IEEE 1394 bus, the circuit arrangement is able to provide several television receivers at the same time with a requested television program, and therefore one circuit arrangement is sufficient for example for a home or even a building with several apartments. Because in a home usually only for a few hours of the day a television receiver is switched on, the circuit arrangement can switch off automatically essential electronic circuit parts consuming the main part of power of the circuit arrangement.

Because the bus management is provided by the physical layer of the IEEE 1394 bus, the circuit arrangement switches to a power down mode, in which advantageously only the physical layer and the power supply are on. The power supply has to be able to provide a low power standby mode and therefore the total power consumption in the power down mode can be below 5 Watts. When compared with the power consumption in on-mode, which may be in the range of 30 to 50 Watts, the power down mode of the circuit arrangement leads to a considerable cost reduction for a user. When a six-wire IEEE 1394 cable is used for connecting the circuit arrangement to the television receivers, the physical layer of the circuit arrangement can be powered also by one of the television receivers being in on-mode. Then the power supply of the circuit arrangement can be switched off also. When a user switches on one of the television receivers and requests a respective television program, the physical layer switches on the circuit arrangement.

In case of a digital satellite receiver, the low noise converter of the satellite antenna can be switched off also in the power down mode. The satellite receiver may be arranged also close to the satellite antenna, because a complete remote operation is performed by using the television receivers via the IEEE 1394 bus. Only one output cable from the satellite receiver to the television receivers is sufficient because IEEE 1394 satellite receivers can be arranged chain like and in parallel.

The invention is further explained by way of a preferred embodiment with reference to the figures, which show:
- Fig. 1: The arrangement of a digital satellite receiver being coupled with television receivers, and
- Fig. 2: a digital satellite receiver coupled to a television receiver.

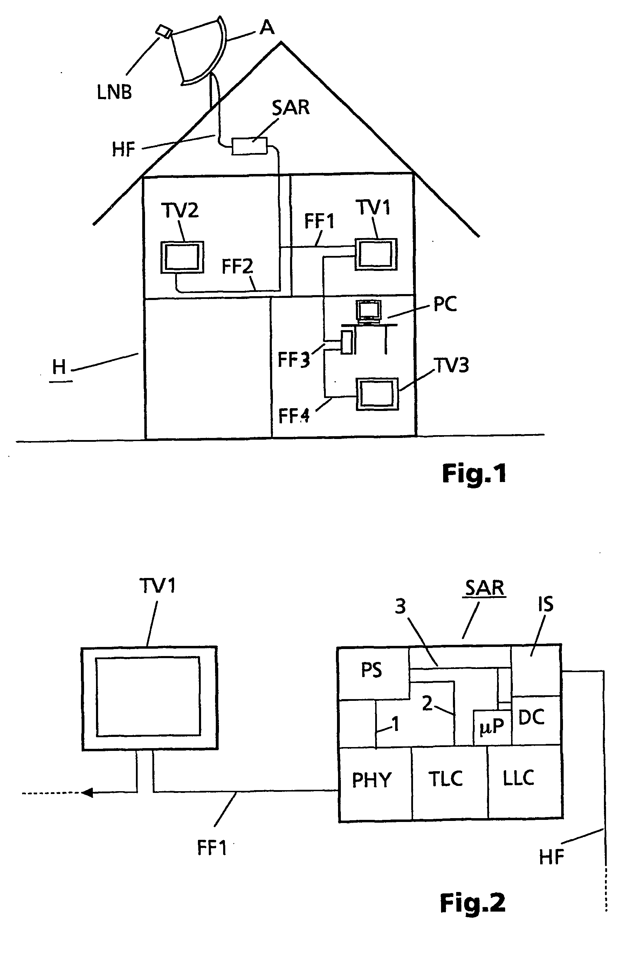

The house H with two floors shown in fig. 1 comprises a satellite antenna A on the roof for receiving a band of television channels via satellite. A digital satellite receiver SAR is arranged close to the satellite antenna A below the roof and connected via a coaxial cable HF to the low noise converter LNB of the satellite antenna A. The power for the LNB is supplied via the cable HF by the satellite receiver SAR.

Several rooms of the house are equipped with television receivers TV1, TV2 and TV3, and one of the rooms also with a personal computer PC. In this special arrangement the television receivers TV1 and TV2 are connected directly via IEEE 1394 cables FF1, FF2 to the satellite receiver SAR, being arranged in parallel. The personal computer PC is connected via an IEEE 1394 cable FF3 to the television receiver TV1, and the television receiver TV3 is connected via a further IEEE 1394 cable FF4 to the personal computer PC.

The television receivers TV1 - TV3 and the personal computer PC are therefore all coupled to one output section of the satellite receiver SAR, the physical layer (PHY) of the IEEE 1394 bus, for digital data transmission in both directions. When a user requests a wanted television program with one of the television receivers TV1 - TV3, or the PC, the selected television receiver demands via an asynchronous data set from the satellite receiver SAR the requested television channel. This channel is provided then by the satellite receiver SAR via an isochronous transport mode, in which the data blocks are equipped with a so called isochronous channel identification number for device allocation. The further television receivers can receive a television channel in the same way in parallel from the satellite receiver SAR.

Therefore all the television receivers can be supplied with an individual television channel at the same time by only one digital satellite receiver SAR with one output section. Limitations are only data rates, because for one television channel a data rate of about 7 or 15 MHz is required and via an electrical IEEE 1394 connection a maximum data rate of 100 or 200 MHz is possible, and further, that only 63 devices can be coupled together via the IEEE 1394 bus. For the cable connections, thin and inexpensive cables are used. Via a copper cable for example , a data rate of 100 MHz can be provided with a cable length up to 25 m. For longer IEEE 1394 connections, or for connections from room to room, also wireless transmissions may be used.

Because of the IEEE 1394 bus management, the satellite receiver SAR can switch to a power down mode when no television channel is required by a television receiver, to save energy. In this power down mode the essential parts for providing the isochronous data transmission to the television receivers can be switched off, as further explained according to Fig. 2. Also the power supply to the low noise converter LNB can be switched off. Essential is only, that the physical layer (PHY) of the IEEE 1394 bus inside the satellite receiver SAR is active for receiving asynchronous data from the television receivers. In case of a demand from a television receiver, the physical layer switches the satellite receiver SAR from the power down mode to the normal mode, in which all circuits of the satellite receiver are active.

As a further embodiment the circuit arrangement of the invention may represent a digital settop box, which is linked via cable to a television channel provider. The settop box can provide then also several television receivers at the same time with a certain television programs via an IEEE 1394 port in the same way as the satellite receiver SAR. The settop box is then also able to switch to a power down mode when no television channel is required by a television receiver for saving energy.

The digital satellite receiver SAR is explained in more detail now according to Fig. 2. It comprises an input section IS having amplifiers and/or filters for receiving the high frequency signal of the low noise converter LNB via the cable HF, usually a coaxial cable. The output signal of the LNB, which is in the range of 1 - 2 GHz, is then down converted by a down-converter DC into a base band, in which the digital data of the television channels can be processed and separated by a signal processing circuit, for example in a microprocessor µP.

The circuit part of the IEEE 1394 bus within the satellite receiver SAR consists of the physical layer PHY, the link layer controller LLC and the transaction layer controller TLC. Via the transaction layer controller TLC and the link layer controller LLC an isochronous transport mode is established, with which a requested television channel is provided via the physical layer PHY and the cable FF1 to the television receiver TV1, or to another television receiver.

All circuit parts of the satellite receiver SAR are supplied with power via lines 1, 2, and 3 by a power supply PS, for example a switched mode power supply (SMPS). With the physical layer PHY and line 1 a control of the power supply PS is possible for switching off of the respective circuit parts in the power down mode, or switching the power supply to a standby mode in which these circuit parts are off. In the power down mode also the microprocessor (µP) of the circuit arrangement can by switched off completely, or is in a low power mode.

The physical layer PHY can be implemented within one integrated circuit, for example the TSB21LV03C from Texas Instruments. This integrated circuit provides all the analog and digital physical layer functions needed to implement a three-port node in a cable-based IEEE 1394 - 1995 network. It provides a power down function, with which the power supply PS of the satellite receiver SAR can be switched to a low power standby mode as described before, and in which all the other circuit parts, transaction layer converter TLC, link layer converter LLC, input section IS, and down converter DC can be switched off, and in which then only the physical layer PHY is active. When the physical layer PHY receives a standardized link-on packet, the power supply PS and the link layer converter LLC is activated. When the link layer converter LLC and the digital signal processing part is powered up, the LLC communicates this to the physical layer PHY and then the 1394 port of the satellite receiver SAR is enabled.

## Claims

1. Circuit arrangement comprising an input section (IS, DC) for receiving a band of digital television channels, a signal processing section (uP, LLC, TLC), an output section (PHY) for supplying several television receivers (TV1-TV3, PC) with one of said television channels, and a power supply (PS) providing power for said input section (IS, DC), signal processing section (uP, LLC, TLC) and output section (PHY), **characterized in that**
the output section (PHY) comprises an IEEE 1394 port with a physical layer (PHY) for a connection to said television receivers (TV1-TV3, PC) for providing data transmission in both directions, that the circuit arrangement comprises a power down mode in which at least parts of said input section (IS, DC) and said signal processing section (uP, LLC, TLC) are switched off by the circuit arrangement, when none of said television receivers is active and in which said physical layer (PHY) is active for receiving asynchronous data from said television receivers (TV1-TV3, PC), and that in case of a demand from a television receiver (TV1-TV3, PC), the physical layer (PHY) switches the circuit arrangement (SAR) from the power down mode to a normal mode, in which all circuits of the circuit arrangement are active.

2. Circuit arrangement according to claim 1, **characterized in that** during said power-down mode the circuit arrangement is in a standby mode in which only the power supply (PS) and the physical layer (PHY) of the output section are active.

3. Circuit arrangement according to claim 1 or 2, **characterized in that** the data transmission to said television receiver (TV1-TV3, PC) is provided in an isochronous transport mode with an asynchronous signal feedback to the physical layer (PHY) of the circuit arrangement (SAR) for control.

4. Circuit arrangement according to claim 1, 2 or 3, **characterized in that** in the power-down mode all circuit parts (IS, DC, TLC, LLC) not important for asynchronous data receiving via said output section (PHY) are switched off.

5. Circuit arrangement according to claim 4, **characterized in that** the microprocessor (µP) of the circuit arrangement is switched off also or is in a low power mode.

6. Circuit arrangement according to one of the preceding claims, **characterized in that** the circuit arrangement is a centralized digital satellite receiver or a centralized digital settop box.

7. Circuit arrangement according to one of the preceding claims 1-5, **characterized in that** the circuit arrangement is arranged as a centralized digital set-top box for receiving a band of television channels via cable.

8. Circuit arrangement according to one of the preceding claims, **characterized in that** the circuit arrangement (SAR) comprises a wireless IEEE 1394 output port for a wireless coupling to said television receivers (TV1-TV3, PC).

## Patentansprüche

1. Schaltungsanordnung, die einen Eingangsabschnitt (IS, DC) zum Empfangen eines Bands von Digitalfernsehkanälen, einen Signalverarbeitungsabschnitt (µP, LLC, TLC), einen Ausgangsabschnitt (PHY) zum Versorgen mehrerer Fernsehempfänger (TV1-TV3, PC) mit einem der Fernsehkanäle und eine Leistungsversorgung (PS), die Leistung für den Eingangsabschnitt (IS, DC), für den Signalverarbeitungsabschnitt (µP, LLC, TLC) und für den Ausgangsabschnitt (PHY) bereitstellt, umfasst, **dadurch gekennzeichnet, dass** der Ausgangsabschnitt (PHY) einen IEEE-1394-Port mit einer Bitübertragungsschicht (PHY) für eine Verbindung mit den Fernsehempfängern (TV1-TV3, PC) umfasst, um eine Datenübertragung in beiden Richtungen bereitzustellen, dass die Schaltungsanordnung einen Ruhemodus umfasst, in dem mindestens Teile des Eingangsabschnitts (IS, DC) und des Signalverarbeitungsabschnitts (µP, LLC, TLC) durch die Schaltungsanordnung abgeschaltet sind, wenn keiner der Fernsehempfänger aktiv ist, und in dem die Bitübertragungsschicht (PHY) zum Empfangen asynchroner Daten von den Fernsehempfängern (TV1-TV3, PC) aktiv ist, und dass im Fall einer Anforderung von einem Fernsehempfänger (TV1-TV3, PC) die Bitübertragungsschicht (PHY) die Schaltungsanordnung (SAR) aus dem Ruhemodus in einen Normalmodus schaltet, in dem alle Schaltungen der Schaltungsanordnung aktiv sind.

2. Schaltungsanordnung nach Anspruch 1, **dadurch gekennzeichnet, dass** die Schaltungsanordnung während des Ruhemodus in einem Stand-by-Modus ist, in dem nur die Leistungsversorgung (PS) und die Bitübertragungsschicht (PHY) des Ausgangsabschnitts aktiv sind.

3. Schaltungsanordnung nach Anspruch 1 oder 2, **dadurch gekennzeichnet, dass** die Datenübertragung zu dem Fernsehempfänger (TV1-TV3, PC) in einem isochronen Transportmodus mit einer asynchronen Signalrückkopplung zu der Bitübertragungsschicht (PHY) der Schaltungsanordnung (SAR) zur Steuerung bereitgestellt wird.

4. Schaltungsanordnung nach Anspruch 1, 2 oder 3, **dadurch gekennzeichnet, dass** in dem Ruhemodus alle Schaltungsteile (IS, OC, TLC, LLC), die für den asynchronen Datenempfang über den Ausgangsabschnitt (PHY) unwichtig sind, ausgeschaltet sind.

5. Schaltungsanordnung nach Anspruch 4, **dadurch gekennzeichnet, dass** der Mikroprozessor (µP) der Schaltungsanordnung ebenfalls abgeschaltet ist oder in einem Energiesparmodus ist.

6. Schaltungsanordnung nach einem der vorhergehenden Ansprüche, **dadurch gekennzeichnet, dass** die Schaltungsanordnung ein zentraler Digitalsatellitenempfänger oder eine zentrale digitale set-Top-Box ist.

7. Schaltungsanordnung nach einem der vorhergehenden Ansprüche 1-5, **dadurch gekennzeichnet, dass** die Schaltungsanordnung als eine zentrale digitale Set-Top-Box zum Empfangen eines Bands von Fernsehkanälen über Kabel ausgelegt ist.

8. Schaltungsanordnung nach einem der vorhergehenden Ansprüche, **dadurch gekennzeichnet, dass** die Schaltungsanordnung (SAR) einen drahtlosen IEEE-1394-Ausgangs-Port für eine drahtlose Kopplung mit den Fernsehempfängern (TV1-TV3, PC) umfasst.

## Revendications

1. Agencement de circuit comprenant une partie d'entrée (IS, DC) pour la réception d'une bande de canaux télévisuels numériques, une partie de traitement du signal (uP, LLC, TLC), une partie de sortie (PHy) pour la fourniture de plusieurs récepteurs de télévision (TV1-TV3, PC) avec un desdits canaux télévisuels et une alimentation (PS) fournissant de l'électricité pour ladite partie d'entrée (IS, DC), la partie de traitement du signal (uP, LLC, TLC) et la partie de sortie (PHY), **caractérisé en ce que**
la partie de sortie (PHY) comprend un port IEEE 1394 avec une couche physique (PHY) pour la connexion auxdits récepteurs de télévision (TV1-TV3, PC) et pour transmettre les données dans les deux sens, **en ce que** l'agencement de circuit comprend un mode de mise hors tension dans lequel les parties de ladite partie d'entrée (IS, DC) et de ladite partie de traitement du signal (uP, LLC, TLC) au moins, sont mises hors circuit par l'agencement du circuit, lorsqu'aucun desdits récepteurs de télévision n'est actif et dans lequel ladite couche physique (PHY) est active pour recevoir des données asynchrones provenant desdits récepteurs de télévision (TV1-TV3, PC), et **en ce que** dans le cas d'une demande provenant d'un récepteur de télévision (TV1-TV3, PC), la couche physique (PHY) bascule l'agencement du circuit (SAR) du mode hors circuit au mode normal, dans lequel tous les circuits de l'agencement du circuit sont actifs.

2. Agencement de circuit selon la revendication 1, **caractérisé en ce que** dans ledit mode hors circuit, l'agencement de circuit est en mode veille dans lequel seule l'alimentation électrique (PS) et la couche physique (PHY) de la partie de sortie sont actives.

3. Agencement de circuit selon la revendication 1 ou 2, **caractérisé en ce que** la transmission de données audit récepteur de télévision (TV1-TV3, PC) est fournie dans un mode de transport isochrone avec un retour de signal asynchrone à la couche physique (PHY) de l'agencement de circuit (8A1) pour contrôle.

4. Agencement de circuit selon la revendication 1, 2 ou 3, **caractérisé en ce que** dans le mode hors circuit, toutes les parties du circuit (IS, DC, TLC, LLC) qui ne sont pas importantes pour la réception de données asynchrones via ladite partie de sortie (PHY), sont mises hors tension.

5. Agencement de circuit selon la revendication 4, **caractérisé en ce que** le microprocesseur (µP) de l'agencement de circuit est aussi mis hors tension ou en mode faible intensité

6. Agencement de circuit selon l'une des revendications précédentes, **caractérisé en ce que** l'agencement de circuit est un récepteur satellite numérique centralisé ou un boîtier décodeur numérique centralisé.

7. Agencement de circuit selon l'une des revendications 1 à 5 précédentes, **caractérisé en ce que** l'agencement de circuit est agencé en tant que boîtier décodeur numérique centralisé pour la réception d'une bande de canaux télévisuels via un câble.

8. Agencement de circuit selon l'une des revendication précédentes, **caractérisé en ce que** l'agencement du circuit (SAR) comprend un port de sortie sans fil IEEE 1394 pour un couplage sans fil auxdits récepteurs de télévision (TV1-TV3, PC).
